(19) Europäisches Patentamt / European Patent Office / Office européen des brevets

(11) **EP 3 811 580 B1**

(12) **FASCICULE DE BREVET EUROPEEN**

(45) Date de publication et mention de la délivrance du brevet:
**18.05.2022 Bulletin 2022/20**

(21) Numéro de dépôt: **19732636.6**

(22) Date de dépôt: **21.06.2019**

(51) Classification Internationale des Brevets (IPC):
**H04L 27/18** (2006.01) **H04L 27/233** (2006.01)
**H04L 7/04** (2006.01) **H04B 1/00** (2006.01)

(52) Classification Coopérative des Brevets (CPC):
**H04L 7/04; H04B 1/0003; H04L 27/18; H04L 27/2338**

(86) Numéro de dépôt international:
**PCT/EP2019/066450**

(87) Numéro de publication internationale:
**WO 2019/243565 (26.12.2019 Gazette 2019/52)**

(54) **PROCÉDÉ DE DÉMODULATION DE SIGNAUX NUMÉRIQUES À L'AIDE DE PLUSIEURS DÉMODULATEURS NUMÉRIQUES**

VERFAHREN ZUR DEMODULATION DIGITALER SIGNALE UNTER VERWENDUNG MEHRERER DIGITALER DEMODULATOREN

METHOD FOR DEMODULATING DIGITAL SIGNALS USING SEVERAL DIGITAL DEMODULATORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.06.2018 FR 1855496**

(43) Date de publication de la demande:
**28.04.2021 Bulletin 2021/17**

(73) Titulaires:
• **Safran Data Systems**
**91978 Courtaboeuf Cedex (FR)**
• **Centre National d'Etudes Spatiales**
**75001 Paris (FR)**

(72) Inventeurs:
• **THOMAS, Alain**
**92140 CLAMART (FR)**
• **LEVEAU, Jean-Marc**
**91570 BIEVRES (FR)**
• **AUGARDE, Stanislas**
**78420 CARRIERES SUR SEINE (FR)**
• **BOUISSON, Emmanuel**
**31650 SAINT-ORENS DE GAMEVILLE (FR)**
• **GAY, Adrien**
**31500 TOULOUSE (FR)**

(74) Mandataire: **Regimbeau**
**20, rue de Chazelles**
**75847 Paris Cedex 17 (FR)**

(56) Documents cités:
**EP-A1- 1 278 345    EP-A1- 1 292 062**
**US-B1- 8 385 305**

• **LUECKE J ET AL: "Programmable digital communications receiver architecture for high data rate avionics and ground applications", 19901015; 19901015 - 19901018, 15 octobre 1990 (1990-10-15), pages 552-556, XP010009869,**
• **KUBO H ET AL: "A parallel blind demodulator in the presence of intersymbol interference", ICC 2001. 2001 IEEE INTERNATIONAL CONFERENCE ON COMMUNICATIONS. CONFERENCE RECORD. HELSINKY, FINLAND, JUNE 11 - 14, 2001; [IEEE INTERNATIONAL CONFERENCE ON COMMUNICATIONS], NEW YORK, NY : IEEE, US, vol. 8, 11 juin 2001 (2001-06-11), pages 2520-2524, XP010553580, DOI: 10.1109/ICC.2001.936604 ISBN: 978-0-7803-7097-5**

**Description**

**DOMAINE DE L'INVENTION**

La présente invention se rapporte au domaine de la démodulation numérique de signaux.

**ETAT DE LA TECHNIQUE**

De façon connue en soi, un démodulateur numérique prend en entrée des échantillons de signal numérique, ces échantillons étant par exemple obtenus par numérisation d'un signal radio analogique.

Un démodulateur numérique peut être implémenté de manière matérielle ou logicielle.

Par exemple, un circuit intégré propre à une application (ASIC) ou bien un circuit logique programmable (tel qu'un FPGA) peut être utilisé en guise de démodulateur numérique matériel. Ces circuits ont pour point commun d'être dédiés à la démodulation. Avec de tels circuits, il est possible d'atteindre des débits de démodulation très élevés. Toutefois, ces circuits logiques présentent de nombreux inconvénients : ils requièrent bien évidemment une configuration matérielle dédiée qui nécessite des temps de développement et de qualification importants, au départ et en cas de mise à jour. Leur architecture est conçue pour traiter un flot continu d'échantillons en entrée et présente une caractéristique de débit maximale. Il n'est actuellement pas possible de paralléliser plusieurs démodulateurs numériques matériels à des fins d'augmentation de débit sauf cas particuliers de modulations « burstées » ou assistés par symboles pilotes, pas plus qu'il n'est possible d'en partager un pour traiter plusieurs porteuses de débit inférieur.

Un démodulateur numérique logiciel est un programme d'ordinateur dédié à la démodulation numérique et susceptible d'être exécuté par un processeur générique, c'est-à-dire un processeur non spécifiquement conçu pour cette tâche. Un exemple connu de démodulateur numérique logiciel est GNU Radio.

Les contraintes fortes d'implémentation, de « modularité » et de portage que l'on rencontre avec un démodulateur numérique matériel sont levées lorsqu'un démodulateur numérique logiciel est utilisé.

Toutefois, le débit maximal de démodulation que peut atteindre un processeur générique exécutant un tel programme est limité et proportionnel à sa fréquence d'horloge, compte tenu du fait que les échantillons sont traités de manière séquentielle. Ainsi, il existe toujours un débit maximum ne pouvant être franchi par un démodulateur numérique logiciel unique.

Il pourrait être envisagé d'utiliser plusieurs démodulateurs numériques logiciels en parallèle pour lever cette limite en débit. EP1278345 A1 (MITSUBISHI ELECTRIC CORP [JP]) 22 janvier 2003 et le document LUECKE J ET AL: "Programmable digital communications receiver architecture for high data rate avionics and ground applications"; 15 octobre 1990, pages 552-556, DOI: 10.1109/DASC.1990.111348 divulguent des récepteurs avec plusieurs démodulateurs numériques logiciels en parallèle.

J Cependant, l'utilisation de plusieurs démodulateurs numériques, même logiciels, fait apparaitre un nouveau problème.

Pour comprendre ce problème, il convient de rappeler qu'un démodulateur numérique doit effectuer une synchronisation de porteuse et/ou de rythme symbole sur la base d'échantillons de signal numérique qu'il reçoit en entrée avant d'être en mesure de produire des symboles démodulés à partir d'échantillons. Une telle synchronisation est dans certaines implémentations mise en œuvre au moyen d'une boucle à verrouillage de phase (PLL). Quelle que soit l'implémentation choisie, ce n'est qu'une fois cette synchronisation effective que le démodulateur numérique peut commencer à convertir des échantillons de signal numérique reçus en entrée, en symboles démodulés. En outre, le démodulateur numérique doit consommer des échantillons de signal numérique pour mener à bien cette synchronisation. Ainsi, des symboles correspondants à des échantillons de signal numérique consommés par le démodulateur numérique avant que la synchronisation ne soit effective sont nécessairement perdus, ou à minima produiront des symboles dont la probabilité d'erreur est non optimale

Dans une architecture classique à un seul démodulateur numérique, la perte de quelques symboles initiaux d'un signal causée par le temps pris par le démodulateur pour se synchroniser sur les échantillons d'entrée qu'il reçoit est peu dommageable. En effet, une fois la synchronisation effective, cette perte n'est par réitérée.

Dans une architecture qui comprendrait plusieurs démodulateurs numériques indépendants travaillant en parallèle, il en irait tout autrement. Si un signal d'entrée numérique à démoduler était divisé en bloc d'échantillons, et que ces blocs étaient traités en parallèle par les différents démodulateurs numériques, il serait alors nécessaire que chaque démodulateur numérique mette en œuvre une nouvelle synchronisation sur un nouveau bloc qu'il reçoit. En conséquence, le nombre de symboles du signal perdus augmenterait avec le nombre de démodulateurs numériques utilisés en parallèle, et les pertes seraient réitérées à chaque nouveau bloc démodulé.

L'invention dont il est question se propose de résoudre ce problème tout en préservant la puissance de calcul mise en parallèle.

**EXPOSE DE L'INVENTION**

Un but de l'invention est de démoduler numériquement un signal avec un débit accru, sans pertes de symboles, ou plus généralement d'optimiser la puissance de calcul nécessaire à un débit donné.

Il est ainsi proposé, selon un premier aspect de l'invention, un procédé de traitement d'une séquence d'échantillons de signal numérique issue d'au moins un signal analogique modulé, la séquence d'échantillons comprenant une première sous-séquence d'échantillons et une deuxième sous-séquence d'échantillons disjointe de la première sous-séquence d'échantillons, le procédé comprenant des étapes de :

- formation d'un premier bloc d'échantillons comprenant la première sous-séquence d'échantillons, et d'un deuxième bloc d'échantillons comprenant des échantillons d'entête suivis de la deuxième sous-séquence d'échantillons,
- démodulation du premier bloc d'échantillons de signal numérique par un premier démodulateur numérique, de sorte à produire un premier bloc de symboles,
- démodulation du deuxième bloc d'échantillons de signal numérique par un deuxième démodulateur numérique indépendant du premier démodulateur numérique de sorte à produire un deuxième bloc de symboles, le deuxième démodulateur numérique mettant en œuvre une synchronisation de porteuse et/ou de rythme symbole, et prenant en entrée le deuxième bloc d'échantillons en commençant par les échantillons d'entête, les échantillons d'entête comprenant des échantillons de synchronisation en nombre adapté pour que la synchronisation soit effective avant que le deuxième démodulateur numérique ne commence à démoduler la deuxième sous-séquence d'échantillons,
- reconstruction d'une séquence de symboles de sortie par concaténation d'une séquence de symboles issue du premier bloc de symboles avec une séquence de symboles issue du deuxième bloc de symboles,

dans lequel
la première sous-séquence d'échantillons comprend des échantillons de queue du premier bloc d'échantillons, et les échantillons d'entête du deuxième bloc d'échantillons correspondent aux échantillons de queue. En d'autres termes, il existe un recouvrement entre la fin du premier bloc d'échantillons traité par le premier démodulateur numérique et le début du deuxième bloc d'échantillons traité par le deuxième démodulateur numérique. Le fait d'utiliser un recouvrement entre les derniers échantillons du premier bloc d'échantillons et les échantillons d'entête du deuxième bloc d'échantillons présente l'avantage d'être particulièrement simple à implémenter.

Les deux démodulateurs numériques étant indépendants, ils peuvent être utilisés en parallèle pour démoduler les blocs qui leur sont fournis. Leur utilisation conjointe permet donc d'obtenir un débit de démodulateur plus élevé de manière moins couteuse qu'en augmentant la puissance d'un unique démodulateur numérique.

De plus, grâce à la présence des échantillons d'entête, la synchronisation de porteuse et/ou de rythme symbole est effective avant que le deuxième démodulateur numérique ne commence à démoduler la deuxième sous-séquence d'échantillons contenus dans le deuxième bloc d'échantillons. Ceci permet d'éviter que certains symboles ne manquent dans le signal de sortie *in fine* reconstruit.

Le procédé selon le premier aspect de l'invention peut être complété à l'aide des caractéristiques suivantes prises seules ou en combinaison lorsque cela est techniquement possible.

Les échantillons d'entête peuvent comprendre en outre des échantillons de garde (E7-E9) situés, dans le deuxième bloc d'échantillons, entre les échantillons de synchronisation (E6) et la deuxième sous-séquence d'échantillons (E10-E14), les échantillons de garde étant en nombre supérieur à un nombre maximal d'échantillons par symbole dans la séquence d'échantillons de signal numérique. Pour comprendre l'effet procuré par ces caractéristiques, il convient de rappeler qu'un échantillonnage du signal analogique modulé est asynchrone, c'est-à-dire qu'il est rythmé par une horloge indépendante de l'émetteur, et que le nombre d'échantillons par symboles du signal analogique peut varier au cours du temps (notamment par effet Doppler, lorsque le signal analogique a été émis par un émetteur puis acquis par un récepteur en mouvement relatif par rapport à l'émetteur). En conséquence, le nombre d'échantillons d'entête consommés par la synchronisation peut aussi varier. Les échantillons de garde ont alors pour effet de garantir qu'aucun symbole contenu dans le deuxième jeu échantillon ne sera consommé par la boucle avant d'être verrouillé même dans ces situations.

Le deuxième démodulateur numérique ayant reçu le deuxième bloc d'échantillons peut être configuré pour ne pas produire de symboles tant que les échantillons d'entête ne sont pas consommés par le deuxième démodulateur.

Le procédé peut comprendre une génération, par le premier démodulateur numérique, d'un premier ensemble de métadonnées relatif au premier bloc de symboles, et une génération, par le deuxième démodulateur numérique, d'un deuxième ensemble de métadonnées relatif au deuxième bloc de symboles, dans lequel la reconstruction est mise en œuvre à l'aide du premier ensemble de métadonnées et du deuxième ensemble de métadonnées.

Le procédé peut en outre comprendre des étapes de détection d'une redondance entre au moins un symbole du premier bloc de symboles et au moins un symbole du deuxième bloc de symboles, à l'aide du premier ensemble de métadonnées et du deuxième ensemble de métadonnées, et retenue dans la séquence de sortie de seulement un parmi deux symboles détectés comme étant redondants. Ces étapes permettent d'éviter l'apparition de symboles redondants dans le signal de sortie, quelle que soit la taille choisie pour les blocs d'échantillons traités respectivement le premier démodulateur numérique et le deuxième démodulateur numérique.

Dans une première variante, le procédé comprend une estimation d'un rapport signal sur bruit associé au premier bloc de symboles, et d'un rapport signal sur bruit associé au deuxième bloc de symboles, le symbole retenu dans le signal de sortie parmi deux symboles redondants étant celui qui est issu du bloc de symbole associé au rapport signal sur bruit le plus élevé parmi les deux rapports sur bruit estimés. Ceci a pour effet de minimiser les risques de présence d'erreurs dans le symbole inclus.

Dans une deuxième variante, le symbole retenu dans la séquence de sortie parmi deux symboles détectés comme étant redondants est le symbole redondant du premier bloc de symboles, étant entendu que la séquence de symboles issue du deuxième bloc de symboles suit la séquence de symboles issue du premier bloc de symboles dans la séquence de symboles de sortie.

Il peut en outre être prévu les caractéristiques suivantes :

- le premier ensemble de métadonnées comprend une première position déterminée par le premier démodulateur et permettant de situer le symbole final dans le premier bloc d'échantillons,
- le deuxième ensemble de métadonnées comprend une deuxième position déterminée par le premier démodulateur et permettant de situer le symbole initial dans le deuxième bloc d'échantillons,
- le nombre de blocs redondants entre le premier bloc de symboles et le deuxième bloc de symbole est calculé en fonction d'un écart entre la première position et la deuxième position.

Le procédé peut comprendre en outre une génération, par le premier démodulateur numérique, d'une première trame comprenant le premier bloc de symboles et le premier ensemble de métadonnées, et une génération, par le deuxième démodulateur numérique, d'une deuxième trame comprenant le deuxième bloc de symboles et le deuxième ensemble de métadonnées. Le fait d'inclure ces positions dans les trames qui comprennent les symboles démodulés a pour avantage de ne nécessiter qu'une seule liaison de données du démodulateur numérique vers un module de reconstruction mettant en œuvre la reconstruction du signal de sortie.

Le premier ensemble de métadonnées peut former un suffixe qui suit le premier bloc de symboles dans la première trame, et le deuxième ensemble de métadonnées peut former un préfixe suivi du deuxième bloc de symboles dans la deuxième trame. Le fait de placer les métadonnées dans le préfixe et dans le suffixe des trames comprenant par ailleurs des symboles démodulés a pour avantage de réduire des phénomènes de latence induits par la mise en oeuvre de démodulations en parallèle. Le module de reconstruction chargé de reconstruire le signal de sortie est notamment capable de détecter une éventuelle redondance entre le premier bloc de symboles et le deuxième bloc de symbole sans pour autant avoir reçu l'intégralité de la deuxième trame.

Le procédé peut en outre comprendre des étapes de :

- estimation par le premier démodulateur numérique d'une première phase de porteuse synchronisée associée au premier bloc de symboles,
- estimation par le deuxième démodulateur numérique d'une deuxième phase de porteuse synchronisée associée au deuxième bloc de symboles,
- si les deux phases de synchronisation de porteuse synchronisée diffèrent, ajustement d'un des blocs de symboles relativement à l'autre bloc de symboles de sorte à éliminer cette différence de phase, avant la reconstruction du signal de sortie.

Ces caractéristiques ont pour effet de permettre une démodulation correcte d'échantillons issus d'un signal préalablement modulé par une constellation présentant une ambiguïté de phase.

La première phase est par exemple incluse dans le premier ensemble de métadonnées et la deuxième phase est par exemple incluse dans le deuxième ensemble de métadonnées.

Le procédé peut comprendre en outre la génération de métadonnées relatives au deuxième bloc d'échantillons formé, lesdites métadonnées étant transmises au deuxième démodulateur numérique et comprenant le nombre total d'échantillons du deuxième bloc d'échantillons et/ou le nombre d'échantillons de synchronisation du bloc et/ou une fréquence centrale de la séquence d'échantillons de signal numérique. Grâce à ces métadonnées, le deuxième démodulateur numérique est capable de déterminer de manière autonome si des premiers échantillons venant de l'ensemble ont été indûment consommés avant que la synchronisation ne soit effective, autrement si les échantillons d'entête étaient en nombre suffisant pour éviter des pertes de symboles en sortie de démodulateur. Ces métadonnées offrent donc la possibilité au deuxième démodulateur numérique de remonter de lui-même une alerte ou de prendre toute autre mesure appropriée, le cas échéant.

Le procédé peut comprendre des étapes de :

- détermination d'un écart fréquentiel entre une fréquence centrale de la séquence d'échantillons de signal numérique et une fréquence centrale attendue,
- correction de la séquence d'échantillons de signal numérique d'après l'écart de fréquentiel pour supprimer cet écart dans la séquence d'échantillons, avant la mise en œuvre de l'étape de formation des blocs d'échantillons, ou bien correction d'un des blocs d'échantillons par l'un des démodulateurs numériques.

Comme la correction est réalisée avant formation des blocs d'échantillons, cette correction est faite une seule fois par bloc d'échantillons à traiter. Cette solution est plus économe en ressources que celle consistant à faire faire la détermination d'écart de fréquence voire la correction qui s'ensuit par chacun des démodulateurs numériques utilisés.

Il est également proposé, selon un deuxième aspect de l'invention, un produit programme d'ordinateur comprenant des instructions de code de programme pour l'exécution des étapes du procédé selon le premier aspect de l'invention, lorsque ce programme est exécuté par au moins un processeur.

Il est également proposé, selon un troisième aspect de l'invention, un dispositif de traitement d'une séquence d'échantillons de signal numérique issue d'au moins un signal analogique modulé, la séquence d'échantillons comprenant une première sous-séquence d'échantillons et une deuxième sous-séquence d'échantillons disjointe de la première sous-séquence d'échantillons, le dispositif de traitement comprenant :

- un distributeur configuré pour former un premier bloc d'échantillons comprenant la première sous-séquence d'échantillons, et pour former un deuxième bloc d'échantillons comprenant des échantillons d'entête suivis de la deuxième sous-séquence d'échantillons,
- un premier démodulateur numérique configuré pour démoduler le premier bloc d'échantillons de signal numérique de sorte à produire un premier bloc de symboles,
- un deuxième démodulateur numérique indépendant du premier démodulateur numérique et configuré pour démoduler le deuxième bloc d'échantillons de signal numérique par de sorte à produire un deuxième bloc de symboles, le deuxième démodulateur numérique étant configuré pour mettre en œuvre une synchronisation de porteuse et/ou de rythme symbole, et prendre en entrée le deuxième bloc d'échantillons en commençant par les échantillons d'entête, les échantillons d'entête comprenant des échantillons de synchronisation en nombre adapté pour que la synchronisation soit effective avant que le deuxième démodulateur numérique ne commence à démoduler la deuxième sous-séquence d'échantillons,
- un module de reconstruction configuré pour reconstruire une séquence de symboles de sortie par concaténation d'une séquence de symboles issue du premier bloc de symboles avec une séquence de symboles issue du deuxième bloc.

La première sous-séquence d'échantillons comprend des échantillons de queue du premier bloc d'échantillons, et les échantillons d'entête du deuxième bloc d'échantillons correspondent aux échantillons de queue.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 illustre de façon schématique un récepteur de signaux analogiques modulés selon un mode de réalisation de l'invention ;
- La figure 2 est un organigramme d'étapes d'un procédé de traitement de signaux susceptible d'être mis en œuvre par le récepteur de la figure 1 ;
- Les figures 3 à 5 illustrent des données d'exemples générées à différents stades du procédé dont l'organigramme est représenté en figure 2.
- La figure 6 est un diagramme présentant des débits obtenus au moyen de ce procédé en fonction d'un nombre de démodulateurs utilisés en parallèle.

Sur l'ensemble des figures, les éléments similaires portent des références identiques.

## EXPOSE DETAILLE DE MODES DE REALISATION

### 1/ Récepteur de signaux analogiques modulés

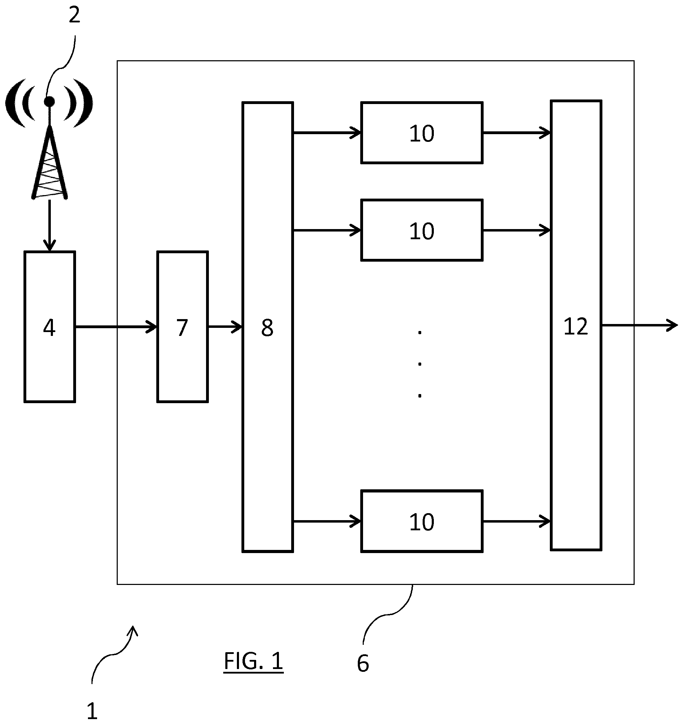

En référence à la **figure 1,** un récepteur 1 couplé à une antenne radio 2, comprend un convertisseur analogique-numérique 4 et un dispositif de traitement 6 d'échantillons de signal numérique.

L'antenne radio 2 est adaptée pour acquérir un signal analogique ayant été préalablement modulé par un émetteur distant.

Le convertisseur analogique-numérique 4 est configuré pour numériser le signal analogique modulé acquis par l'antenne 2, c'est-à-dire pour produire un flux continu d'échantillons de signal numérique sur la base de ce signal analogique, flux lui-même continument divisé en séquences d'échantillons. Le convertisseur analogique travaille à une fréquence d'échantillonnage déterminée.

Le dispositif de traitement 6 comprend un distributeur 8, une pluralité de démodulateurs numériques 10, et un module de reconstruction (ou « sérialiseur ») 12.

Le dispositif de traitement 6 peut également comprendre un module de détection et/ou correction de fréquence porteuse 7, lequel est de préférence agencé en amont du distributeur 8. Ce module de détection 7 a pour fonction d'estimer et éventuellement de corriger une erreur de fréquence centrale, par exemple par analyse spectrale du signal numérisé par le convertisseur analogique-numérique 4 (ce traitement étant connu de l'homme du métier).

Le distributeur 8 a pour fonction de former des blocs d'échantillons à partir des échantillons produits par le convertisseur analogique-numérique.

Le distributeur 8 peut ainsi comprendre une ou plusieurs mémoires tampon pour stocker des échantillons de signal et/ou des blocs d'échantillons de signal, et un processeur pour mettre en œuvre la création des blocs.

Les démodulateurs numériques 10 sont indépendants les uns des autres et peuvent donc par conséquent fonctionner en parallèle.

Les démodulateurs numériques 10 sont de préférence de type « logiciel ». Autrement dit, chaque démodulateur numérique comprend une unité d'exécution comme par exemple un processeur configuré pour exécuter un programme de démodulation numérique.

Par exemple, un CPU ou un GPU peut être utilisé comme démodulateur numérique 10 ou comme ensemble de plusieurs démodulateurs numériques 10. On peut prévoir que chaque démodulateur dispose d'un ou plusieurs processeurs ; il peut être également prévu que plus démodulateurs numériques correspondent à plusieurs tâches parallèles exécutées en temps partagé par un seul et même processeur.

Les démodulateurs numériques 10 peuvent être identiques ou différents.

Chaque démodulateur numérique 10 est agencé pour recevoir un bloc d'échantillons formé par le distributeur 8, et pour produire un bloc de symboles à partir de ce bloc. Par convention, dans le présent texte, le terme de « symbole » fait implicitement référence à des données numériques démodulées, et le terme « échantillon » fait implicitement référence à des données numériques n'ayant pas encore été démodulées.

Le module de reconstruction 12 est agencé pour recevoir les blocs de symboles produits par les différents démodulateurs numériques. La fonction principale de ce module de reconstruction 12 est de reconstruire une séquence continue de symbole émis qui, idéalement, correspond à un signal originel ayant fait l'objet d'une modulation par un émetteur. A cet effet, le module de reconstruction 12 comprend par exemple au moins un processeur et au moins une mémoire tampon.

**2/ Procédé de traitement de signaux analogiques modulés**

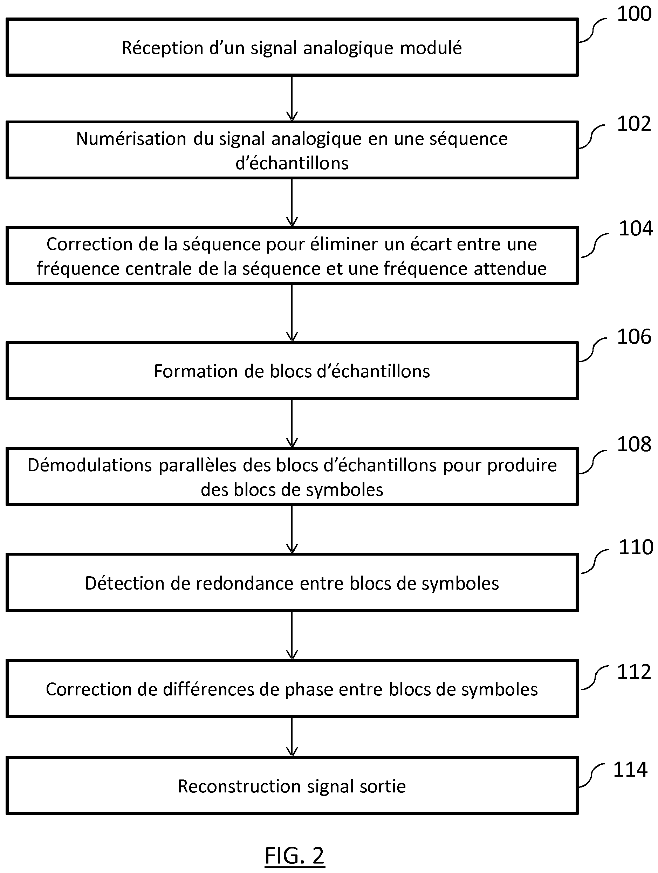

En référence à la **figure 2,** le récepteur 1 met en œuvre les étapes suivantes.

L'antenne radio 2 acquiert un signal analogique préalablement modulé (étape 100).

Sur la base de ce signal acquis, le convertisseur analogique-numérique 4 produit un flux continu d'échantillons, ce flux pouvant lui-même être divisé en séquences d'échantillons de signal numérique (étape 102).

Dans ce qui suit, on décrit des étapes qui sont mise en œuvre et répétées pour chaque séquence d'échantillons que comprend le flux.

Il est déterminé un écart fréquentiel entre une fréquence centrale de la séquence d'échantillons de signal numérique et une fréquence centrale attendue par le récepteur 1. Une correction de la séquence d'échantillons de signal numérique est ensuite effectuée pour supprimer cet écart dans la séquence d'échantillons (étape 104). Dans un mode de réalisation, cette correction est effectuée par une conversion de fréquence dans le module de détection 7, dans une autre réalisation les démodulateurs numériques 10 sont informés de cette fréquence centrale par une métadonnée et initialisent par exemple une PLL sur cette valeur.

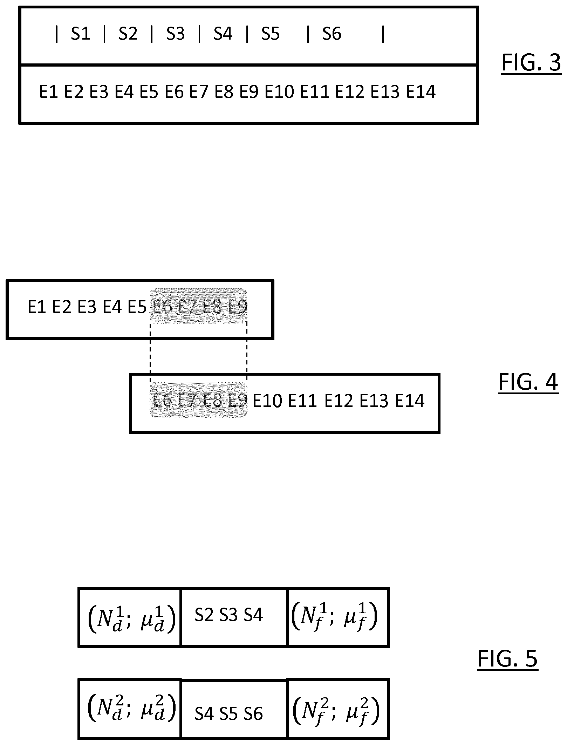

Les échantillons de la séquence sont destinés à faire l'objet d'une démodulation de sorte à obtenir une séquence de symboles. L'échantillonnage dans la fonction de numérisation 4 n'est pas obligatoirement synchrone du rythme symbole, aussi le nombre d'échantillons instantanés inclus dans une période de symbole peut varier entre $E(Ts)$ et $E(Ts)+1$ où $Ts$ est la période symbole comptée en période d'échantillonnage, dans lequel $Ts$ n'est pas entier et $E$ désigne une partie entière. La **figure 3** montre ainsi un exemple de séquence de 14 échantillons E1 à E14, sur la base de laquelle peuvent être obtenus seulement six symboles référencés S1 à S6 par démodulation. Notamment, les échantillons E2 et E3 sont dans la période du symbole S1, et les échantillons E11, E12 et E13 sont dans la période du symbole S6. Dans cette séquence d'exemple, le nombre d'échantillons moyen par symbole est de 2,33.

La séquence d'échantillons (après éventuelle correction fréquentielle) est fournie au distributeur 8.

Formellement, la séquence d'échantillons peut être partitionnée en un ensemble ordonné de K sous-séquences d'échantillons différentes d'indices allant de 1 à K. Par convention, ces indices correspondent à un ordre de lecture de la séquence, c'est-à-dire que la sous-séquence d'indice 1 se situe en tête de la séquence, et la sous-séquence d'indice K est à la fin de la séquence. Si un démodulateur numérique unique devait démoduler la séquence d'échantillons complète (ce qui n'est pas effectué au cours du procédé comme on le verra dans la suite), ce démodulateur numérique lirait en premier la sous-séquence d'indice 1 et finirait par lire la sous-séquence d'indice K.

Le distributeur 8 forme K blocs d'échantillons à partir de la séquence d'échantillons (étape 106). Le nombre K de blocs créés est égal au nombre de démodulateurs numériques du dispositif de traitement qui seront utilisés dans la suite.

En règle générale, chaque échantillon de la séquence reçue par le distributeur 8 se retrouve dans au moins un bloc formé par le distributeur 8.

Pour tout i allant de 1 à K, le bloc d'échantillons d'indice i comprend des échantillons d'entête suivis de la sous-séquence d'échantillons d'indice i prélevée depuis la séquence d'échantillons reçue par le distributeur 8.

Les échantillons d'entête de chaque bloc d'échantillons sont eux aussi issus de la séquence d'échantillons reçue par le distributeur 8.

Les échantillons d'entête comprennent, dans cet ordre, des échantillons de synchronisation et des échantillons de garde. Le nombre des échantillons de synchronisation et de garde sont prédéterminés (on verra par la suite que ces nombres sont choisi de façon particulière).

La sous-séquence d'échantillons d'indice i suit immédiatement les échantillons de garde dans le bloc d'échantillons d'indice i.

De façon avantageuse, pour tout i allant de 2 à K, les échantillons d'entête du bloc d'échantillons d'indice i correspondent à des échantillons de queue du bloc d'échantillons d'indice i-1. En d'autres termes, il existe un recouvrement entre deux blocs d'échantillons d'indices respectifs i et i-1. Un tel recouvrement est particulièrement avantageux car simplifie de façon drastique l'implémentation de la formation des blocs par le distributeur 8.

Prenons l'exemple illustré en **figure 4,** où il est formé deux blocs (K=2) sur la base de la séquence d'échantillons illustrée en figure 3. Dans cet exemple, un premier bloc d'indice 1 (en partie supérieure de la figure 4) formé par le distributeur 8 comprend neuf échantillons E1-E9, et un deuxième bloc d'indice 2 (en partie inférieure de la figure 4) formé par le distributeur 8 comprend neuf échantillons E6-14. Le deuxième bloc d'échantillons comprend quatre échantillons d'entête E6 à E9 suivis d'une sous-séquence E10-E14 de cinq échantillons issus de la séquence d'échantillons E1-E14. Les échantillons d'entête E6-E9 comprennent un unique échantillon E6 de synchronisation, suivi de trois échantillons de garde E7-E9. On constate que, conformément à la variante de réalisation avantageuse décrite précédemment, il existe un recouvrement entre les deux blocs d'échantillons formés puisque les quatre échantillons d'entête E6-E9 du deuxième bloc d'échantillons (d'indice 2) correspondent aux quatre échantillons de queue du premier bloc d'échantillons (d'indice 1). Ce recouvrement est illustré par les deux traits en pointillés de la figure 4.

Les K blocs formés par le distributeur 8 sont ensuite transmis aux K démodulateurs numériques 10 différents du dispositif de traitement 6. Par convention, on nomme démodulateur numérique d'indice i le démodulateur recevant le bloc d'échantillons d'indice i.

Pour tout i allant de 1 à K, le démodulateur numérique 10 d'indice i met en œuvre les étapes suivantes.

Avant de pouvoir produire des symboles, le démodulateur numérique 10 d'indice i effectue une synchronisation de porteuse et/ou de rythme symbole sur la base d'échantillons de signal numérique qu'il reçoit en entrée. Cette synchronisation, connue de l'homme du métier, est par exemple mise en œuvre au moyen d'une boucle à verrouillage de phase (PLL) ou bien tout autre moyen comme une commande automatique de fréquence (CAF), un estimateur comme par exemple celui de Classen-Meyr.

On distingue deux périodes successives au cours du traitement par le démodulateur numérique 10 d'indice i du bloc d'échantillons d'indice i :

- une période d'acquisition, durant laquelle la synchronisation de porteuse et/ou de rythme symbole mise en œuvre par le démodulateur 10 n'est pas encore effective, et durant laquelle des échantillons du bloc d'échantillons d'indice i sont consommés par le démodulateur 10 sans pour autant que le démodulateur ne produise de symboles corrects ;
- une période de poursuite, qui commence à partir de l'instant auquel la synchronisation est détectée comme effective, et durant laquelle le démodulateur 10 consomme en entrée d'autres échantillons du bloc d'échantillons d'indice i et produit en sortie des symboles.

Durant la période d'acquisition, le démodulateur numérique 10 d'indice i commence par consommer les échantillons d'entête, et plus particulièrement les échantillons de synchronisation.

Le nombre des échantillons de synchronisation du bloc d'échantillons d'indice i est choisi de telle sorte que la synchronisation soit effective - autrement dit que la période d'acquisition se termine - avant que le démodulateur numérique 10 d'indice i ne commence à consommer la sous-séquence d'échantillons d'indice i, située dans le bloc à la suite des échantillons d'entête, pour produire des symboles. Cela permet d'éviter que certains symboles du signal originel ne soient perdus ou erronés en raison du fait que certains échantillons de cette sous-séquence d'indice i ne soient consommés par le démodulateur au cours de la période d'acquisition.

Ce nombre d'échantillons de synchronisation est ainsi connu du distributeur 8 et utilisé par ce dernier pour former le bloc d'échantillon d'indice i. Ce nombre d'échantillons de synchronisation peut être mémorisé dans une mémoire du distributeur 8 avant son démarrage. Ce nombre peut éventuellement être modifié par le distributeur 8 en fonction du signal analogique capté par l'antenne 2.

Pour déterminer le nombre d'échantillons de synchronisation, l'homme du métier peut procéder de la manière suivante dans le cas par exemple d'une synchronisation par PLL d'ordre 2 : l'homme de métier définit une bande de boucle de fréquence libre $\omega_n$ compatible avec une variation maximale de fréquence visée et du rapport signal sur bruit attendu (SNR) à l'entrée du récepteur 1. Le temps d'acquisition est alors de $2\pi/\omega_n$, où $\omega_n$ dépend (est un pourcentage) du rythme symbole. L'entête peut alors se calculer en nombre de symboles émis. Soit Nse le nombre de symbole émis. La connaissance de l'écart fréquentiel sous forme de ratio P entre horloge émetteur et récepteur, consécutif des dérives oscillateurs, effet Doppler, etc. permet d'en déduire l'incertitude P*RS sur le rythme RS à réception et permet d'en déduire la taille de l'entête en nombre d'échantillons à réception Ne. On a

$$Ne = E[P * Nse * suréchantillonage] + 1$$

où « suréchantillonnage » est un facteur entier de suréchantillonnage.

En soi, les échantillons de synchronisation suffisent à éviter des pertes de symboles causées par l'existence inévitable de la période d'acquisition. Cependant, un autre phénomène peut provoquer une omission de symboles qui ne serait généré par aucun démodulateur numérique. Il s'agit d'un problème d'intervalle qui tient compte du fait que le démodulateur numérique, une fois verrouillé, requiert un nombre minimal d'échantillons consécutifs pour calculer un symbole. Selon sa position relative vis-à-vis d'une période d'échantillonnage, ce nombre peut varier et on note L cette longueur maximale pour tous les cas de figure.

Pour remédier à ce problème, le nombre d'échantillons de garde est choisi de sorte à garantir que tout groupe consécutif de L échantillons soit présent dans au moins un bloc i, après retrait des échantillons de synchronisation. Ceci permet de garantir qu'aucun symbole ne nécessite l'utilisation d'échantillons de synchronisation pour être généré.

Le nombre d'échantillons de garde est, comme le nombre d'échantillons de synchronisation, connu du distributeur 8 et utilisé par ce dernier pour former les blocs d'échantillons (le nombre d'échantillons d'entête étant la somme du nombre d'échantillons de synchronisation et du nombre d'échantillon de garde). Le nombre d'échantillons de garde peut être mémorisé dans une mémoire du distributeur 8 avant son utilisation. Ce nombre peut éventuellement être modifié par le distributeur 8 en fonction du signal analogique capté par l'antenne.

Pour déterminer le nombre d'échantillons de garde, l'homme du métier peut procéder de la manière suivante : Le nombre minimal est L-1 où L est la taille du filtrage équivalent le plus long en tenant compte de tous les filtrages utilisés en cascade dans le démodulateur. Dans le démodulateur le plus simple, L = E(Ts)+1 c'est-à-dire que le filtre est au moins égal à la durée symbole.

Le démodulateur fournit en sortie une séquence de symboles jusqu'à consommation de tous les échantillons jusqu'à la fin du bloc. Trois modes de réalisations sont envisagés pour le démarrage de la séquence de symbole. Dans un premier mode, le démodulateur numérique 10 génère des symboles dès le début de la consommation des échantillons du bloc, y compris durant la période d'acquisition, mais dans ce cas, les premiers symboles générés entachés d'une probabilité d'erreur non optimale ne seront pas exploités. Dans un deuxième mode, le démodulateur numérique génère des symboles seulement au cours de la période de poursuite et non durant la période d'acquisition ; dans ce cas les symboles générés sont exploitables mais la position du premier symbole est aléatoire vis-à-vis du début du bloc. Dans un troisième mode de réalisation, qui est un mode de réalisation préféré (et qu'on désignera par la suite comme le mode « à entête silencieux »), le démodulateur numérique 10 génère des symboles à partir du moment où il atteint la sous-séquence après consommation de l'entête. Dans ce dernier cas, tous les symboles sont corrects et l'incertitude de position du premier symbole généré est réduite au minimum. Ce dernier mode n'est possible que quand le démodulateur numérique connait le nombre d'échantillons d'entête.

Il est néanmoins possible de laisser le démodulateur numérique 10 d'indice i traiter le bloc d'échantillons d'indice i sans qu'il ait connaissance du nombre d'échantillons de synchronisation ou de garde qu'il contient. En variante, les démodulateurs numériques 10 sont configurés avec ces deux valeurs avant leur démarrage, de la même façon que le distributeur 8. Dans une autre variante, qui est préféré, le distributeur 8 renseigne les différents démodulateurs sur la taille des blocs qu'il leur transmet. Ainsi, le distributeur 8 génère non seulement les K blocs d'échantillons mais également K jeux de métadonnées qui y sont relatives, chaque jeu de métadonnées relatif au bloc d'échantillons d'indice i contenant au moins une des tailles suivantes :

- le nombre d'échantillons de synchronisation du bloc d'échantillons d'indice i,
- le nombre d'échantillons de garde du bloc d'échantillons d'indice i,
- le nombre d'échantillons d'entête du bloc d'échantillons d'indice i (somme des deux précédents nombres),
- le nombre d'échantillons de la sous-séquence d'indice i,
- le nombre total d'échantillons du bloc d'échantillons d'indice i (somme de deux précédents nombres).

On précise ici que le démodulateur a la possibilité de compter les échantillons du bloc de telle sorte que cette dernière information peut lui être connue sans lui avoir été transmise. Toutefois, cette donnée ne sera connue qu'une fois tous les échantillons du bloc consommés si l'on ne veut pas que le démodulateur nécessite l'emploi d'une opération supplémentaire pour l'établir.

Alors, si pour une raison quelconque la synchronisation mise en œuvre par le démodulateur numérique 10 d'indice i consomme des échantillons de la sous d'indice i et ce malgré la présence des échantillons d'entête dans le bloc d'échantillons d'indice i, alors le démodulateur numérique 10 a la possibilité de détecter cette situation problématique grâce à ces métadonnées, et mettre en œuvre dans ce cas une action appropriée (émission d'un signal d'alerte, arrêt du démodulateur numérique 10, etc.). Pour mettre en œuvre une telle détection, le démodulateur numérique 10 peut tout simplement compter les échantillons qu'il consomme dans le bloc d'échantillons d'indice i qu'il a reçu et comparer, une fois la synchronisation effective, ce nombre d'échantillons comptés avec le nombre d'échantillons de synchronisation qui lui a été fourni par le distributeur 8 dans les métadonnées, ou par configuration initiale.

De même façon, dans le mode à entête silencieux, le démodulateur ne génère pas de symbole avant d'avoir atteint le premier échantillon de la sous-séquence c'est-à-dire après avoir consommé tous les échantillons d'entête ainsi que le suivant immédiat. Cette fois-ci, pour mettre en œuvre cette disposition, le démodulateur écarte tout symbole qui vient d'être calculé si le nombre d'échantillon consommé alors n'a pas atteint le nombre d'échantillons d'entête qui lui a été fourni par le distributeur 8 dans les métadonnées (ou par configuration initiale) après ajout d'une unité. Ceci garantit donc que tout symbole généré aura alors été calculé à l'aide des au plus L derniers échantillons dont aucun n'aura été puisé dans les échantillons de synchronisation précédant la garde.

Le distributeur 8 peut également renseigner les démodulateurs numériques 10 en fournissant dans les métadonnées des indices de numérotation comme :

- Le numéro du bloc dans l'ordre d'agencement du distributeur
- Le numéro d'ordre dans la séquence du premier échantillon du bloc
- Le numéro d'ordre dans la séquence du premier échantillon de la sous-séquence (après entête).

Certaines de ces données combinées permettent par soustraction d'en déduire la taille de l'en-tête ou du bloc, ce qui permet alors de faire l'économie de la transmission de ces métadonnées. Comme on le verra ci-dessous, ces métadonnées de numérotation permettent au démodulateur numérique 10 de constituer des métadonnées à l'usage du module de reconstruction 12.

D'autres données peuvent être également fournies par le distributeur 8 aux démodulateurs numériques 10 dans les métadonnées, comme par exemple une fréquence centrale de la séquence d'échantillons de signal numérique de façon à ce que ceux-ci puissent pré-positionner leur oscillateur local pour permettre une acquisition rapide de la synchronisation de porteuse.

En appliquant les principes évoqués ci-dessus, les K démodulateurs numériques 10 utilisés produisent K blocs de symboles sur la base des K bloc d'échantillons qu'ils ont reçus.

On a représenté en figure 5 des blocs de symboles obtenus sur la base des blocs d'échantillons représentés en figure 4 (K=2). Le premier démodulateur (d'indice 1) a produit un premier bloc de symboles comprenant les symboles S2 à S4, et le deuxième démodulateur (d'indice 2) a produit un deuxième bloc de symboles comprenant les symboles S4 à S6.

Les K blocs de symboles sont ensuite transmis au module de reconstruction 12.

Le module de reconstruction 12 reconstitue un signal de sortie à partir de ces K blocs de symboles, en les assemblant les uns avec les autres selon un ordre qui correspond à l'ordre dans lequel les sous-séquences apparaissaient dans la séquence d'échantillons fournie par le convertisseur analogique-numérique 4.

Pour que le module de reconstruction 12 respecte cet ordre particulier d'assemblage des blocs de symboles, il peut être prévu d'établir une relation d'ordre fixe entre les démodulateurs numériques 10 du dispositif de traitement 6. Dans ce cas, il suffit au module de reconstruction 12 de savoir par quel démodulateur numérique 10 un bloc de symbole a été produit pour en déduire son ordre par rapport aux autres blocs de symbole. Cette connaissance peut être établie par des liaisons indépendantes entre les différents démodulateurs numériques 10 et des ports d'entrée différents du module de reconstruction 12. En variante, il peut être prévu que le module de reconstruction 12 reçoivent des données d'ordonnancement du distributeur 8 de façon à déduire l'ordre d'assemblage des différents blocs de symboles produits par les démodulateurs numériques. Enfin, les démodulateurs numériques 10 peuvent utiliser les métadonnées de numérotation d'ordre qu'ils ont eux-mêmes reçus du module de distribution pour renvoyer à leur tour des métadonnées au module de reconstruction.

On retrouve ainsi dans le signal de sortie une séquence de symboles issue du bloc de symboles d'indice 1, suivie d'une séquence de symboles issue du bloc de symboles d'indice 2, ... jusqu'à une séquence de symboles issue du bloc de symboles d'indice K.

Dans une situation optimale, deux blocs de symboles d'indices successifs i-1 et i n'ont pas de symbole en commun. Dans cette situation, ces deux blocs de symboles successifs sont simplement concaténés au cours de la reconstruction du signal de sortie.

Toutefois, il peut exister une redondance de quelques symboles entre ceux produits en dernier par le démodulateur numérique 10 d'indice i-1 à partir du bloc d'échantillons d'indice i-1, et ceux produits en premier par le démodulateur numérique 10 d'indice i à partir du bloc d'échantillons d'indice i. Ainsi, dans l'exemple illustré en figure 5, le symbole final (dernier symbole) produit par le premier démodulateur et le symbole initial (premier symbole) produit par le deuxième démodulateur sont tous les deux le symbole S4.

C'est pourquoi le module de reconstruction 12 met en œuvre de préférence une étape de détection d'une redondance éventuelle entre les derniers symboles du bloc d'indice i-1 et les premiers symboles du bloc d'indice i. Quand un symbole est redondant, le module de reconstruction 12 ne retient seulement qu'un des deux exemplaires dans le signal de sortie, et élimine l'autre.

Dans un mode de réalisation, les démodulateurs numériques 10 ne se bornent pas à produire des blocs de symboles, mais génèrent également des métadonnées permettant d'aider le module de reconstruction 12 à mener à bien cette étape de détection de redondance de symboles, sans chercher à comparer directement ces symboles.

Ainsi, le démodulateur numérique 10 d'indice i-1 détermine une position fractionnaire permettant de situer le symbole final relativement aux échantillons dans le bloc d'indice i-1. Comme on l'a vu précédemment, les symboles ne sont pas synchrones des échantillons : l'instant d'échantillonnage optimal d'un symbole ne coïncide donc généralement pas avec l'instant d'un échantillon. Ainsi, Cette position d'échantillon peut être un couple $\left(N_f^{i-1};\ \mu_f^{i-1}\right)$, définissant un nombre fractionnaire où :

- $N_f^{i-1}$ est la partie entière qui désigne le numéro du dernier échantillon qui précède immédiatement l'instant d'échantillonnage optimal du symbole final. Typiquement, l'échantillon concerné peut être un échantillon de queue du bloc d'échantillons d'indice i-1 correspondant à un des échantillons de garde du bloc d'échantillons d'indice i.

- $\mu_f^{i-1}$ est une partie fractionnaire de valeur comprise dans l'intervalle [0,1[ relativement à une période d'échantillonnage. Cette partie fractionnaire mesure l'écart relatif entre le début de l'échantillon précédant immédiatement par exemple l'instant d'échantillonnage optimal du symbole final, et l'instant d'échantillonnage optimal du symbole final lui-même. Cette valeur est calculée par la boucle de synchronisation du démodulateur.

Dans l'exemple les figures 3 à 5, $N_f^1$ est l'écart (en nombres d'échantillons) entre l'échantillon de référence E6 et l'échantillon E7, qui est le dernier échantillon précédent la production du symbole final du premier bloc d'échantillons. Par ailleurs, l'instant d'échantillonnage optimal du symbole final se situe environ à mi-chemin du début de l'échantillon E7 et de l'échantillon suivant E8. C'est pourquoi dans ce cas le premier démodulateur aboutit aux valeurs suivantes :

$$N_f^1 = 1$$

$$\mu_f^1 = 0,48$$

De la même façon, le démodulateur numérique 10 d'indice i détermine une position fractionnaire permettant de situer le symbole relativement aux échantillons dans le bloc d'indice i. Cette position d'échantillon à partir fractionnaire peut être un couple $\left(N_d^i;\ \mu_d^i\right)$, définissant un nombre fractionnaire où :

- $N_d^i$ est la partie entière qui désigne le numéro de l'échantillon qui précède immédiatement l'instant d'échantillonnage optimal du symbole initial. Typiquement, l'échantillon concerné peut être l'un des échantillons de garde du bloc d'échantillons d'indice i.

- $\mu_d^i$ est une partie fractionnaire de valeur comprise dans l'intervalle [0,1[ relativement à une période d'échantillonnage. Cette partie fractionnaire mesure l'écart relatif entre le début de l'échantillon précédant immédiatement l'instant d'échantillonnage optimal du symbole initial, et l'instant d'échantillonnage optimal du symbole initial lui-même. Cette valeur est calculée par la boucle de synchronisation du démodulateur.

Dans l'exemple des figures 3 à 5, $N_d^2$ est l'écart (en nombres d'échantillons) entre l'échantillon de référence E7 et l'échantillon E8, qui est le premier échantillon que le démodulateur d'indice 1 a utilisé, une fois la synchronisation effective, pour produire le symbole initial du bloc de symboles d'indice 2. Par ailleurs, l'instant d'échantillonnage optimal du symbole initial se situe environ un peu plus proche de l'échantillon E7 que de l'échantillon suivant E8. C'est pourquoi dans ce cas le deuxième démodulateur aboutit aux valeurs suivantes :

$$N_d^2 = 1$$

$$\mu_d^2 = 0,38$$

Les positions à partie fractionnaire $\left(N_f^i;\ \mu_f^i\right)$ et $\left(N_d^i;\ \mu_d^i\right)$ relativement au numéro d'ordre des échantillons sont transmises au module de reconstruction 12 par le démodulateur numérique 10 d'indice i.

La détection de redondance éventuelle entre les blocs de symboles d'indices respectifs i-1 et i est mise en œuvre par le module de reconstruction 12 sur la base d'un écart entre les deux positions centrales de symboles à partie fractionnaire fournies.

Dès lors que la synchronisation de rythme est effective dans les deux démodulateurs sur les blocs i et i-1 au voisinage de ces symboles, la différence entre les deux instants fractionnaires est en effet forcément proche d'un nombre entier de périodes symboles Ts : $\left(N_d^i + \mu_d^i\right) - \left(N_f^{i-1} + \mu_f^{i-1}\right) \approx kT_s$ , l'erreur entachant cette égalité étant faible devant Ts. Par une discrimination très simple des intervalles associés à chaque valeur k (on peut par exemple fixer le seuil d'incertitude de position à 1 car Ts>2 pour respecter le théorème d'échantillonnage de Nyquist), il est possible de déterminer sans ambiguïté cette valeur, c'est-à-dire le nombre de périodes séparant les symboles de fin du bloc i-1 et de début du bloc i. Si k est strictement supérieur à un, alors c'est que l'on a omis des symboles entre les deux blocs. Une alarme peut être levée car cela signifie que l'on ne peut pas démoduler ces symboles, la cause étant probablement que le démodulateur i a subi une erreur de synchronisation qui l'a empêché de fournir des symboles à temps. Si k vaut un, alors le premier symbole du bloc i suit le dernier du bloc i-1 et on peut concaténer la séquence de symboles du bloc i directement après ceux du bloc i-1. Si k vaut zéro ou est négatif, alors c'est qu'on a affaire à un ou plusieurs symboles redondants, en nombre 1-k. Il convient alors d'écarter ceux-ci sur l'une des deux séquences avant de les concaténer.

Dans la réalisation dite d'entête silencieux où les démodulateurs numériques 10 ne génèrent des symboles qu'après avoir entamé la consommation d'échantillons dans la sous-séquence, alors k ne peut valoir que 0 ou 1, c'est-à-dire que l'on n'a aucun ou un seul symbole redondant.

Les symboles redondants sont donc supprimés avant concaténation des deux blocs de symboles. On se retrouve dans ce deuxième cas dans l'exemple illustré en figures 3 à 5, puisque |(1 + 0,48) - (1 + 0,38)| = 0,1 < 1. Ainsi, un symbole est redondant et le symbole S4 est éliminé soit au début du bloc de symboles d'indice 2, soit à la fin du bloc de symboles d'indice 1.

De préférence, le symbole retenu dans le signal de sortie parmi les deux symboles redondants n'est pas choisi au hasard par le module de reconstruction 12. Par défaut, dans un premier mode de réalisation, on supprimera les symboles de la séquence i au bénéfice de ceux de la séquence i-1. Cette réalisation est préférée à celle contraire car il est plus probable que l'erreur de phase résiduelle de la synchronisation sur le bloc i soit supérieure à celle du bloc i-1 car l'acquisition en est plus récente. Ces symboles sont donc probablement entachés d'une probabilité d'erreur supérieure.

Dans un second mode de réalisation, le démodulateur numérique 10 d'indice i-1 estime un rapport signal sur bruit associé au symbole final qu'il produit, et le démodulateur numérique 10 d'indice i estime un rapport signal sur bruit associé au symbole initial qu'il produit. Ces rapports de signal sur bruit sont ensuite transmis au module de reconstruction 12. En cas de redondance, le module de reconstruction 12 conserve dans le signal de sortie le ou les symboles redondants associés au rapport signal sur bruit le plus élevé parmi les deux rapports sur bruit qui lui ont été fournis par les démodulateurs d'indices i-1 et i.

Dans un troisième mode de réalisation, le démodulateur numérique 10 d'indice i vérifie le nombre d'échantillons qu'il a consommés au cours de la première période (donc jusqu'au moment où la synchronisation devient effective, moment à partir duquel il peut produire des symboles). Si tous les échantillons de synchronisation sont consommés par le démodulateur numérique 10 d'indice i avant que la synchronisation soit effective, alors le symbole final produit par le démodulateur i-1 est inclus dans le signal de sortie et le symbole initial produit par le démodulateur numérique 10 d'indice i est éliminé. Sinon, le symbole initial produit par le démodulateur numérique 10 d'indice i est inclus dans le signal de sortie et le symbole final produit par le démodulateur numérique 10 d'indice i-1 est éliminé.

De façon connue en soi, le diagramme de constellation associé à la plupart des schémas de modulation impliquant la phase est invariant par rotation d'une fraction de tour. Il s'ensuit une ambiguïté de phase en sortie démodulateur de $2\pi/M$ où M est l'ordre de l'ambiguïté (2 pour BPSK, 4 pour QPSK par exemple). Dans un démodulateur classique fonctionnant continûment, cette ambiguïté de phase est levée grâce à un mot de synchronisation ou par un encodage différentiel. Cependant, dans le dispositif de traitement 6, l'utilisation d'un tel mot de synchronisation nécessiterait de devoir faire communiquer entre eux les différents démodulateurs 10, ce qui n'est pas une solution acceptable car rendrait les différents démodulateurs 10 dépendants les uns des autres.

Dans tous les cas, les démodulateurs 10, lors de la période d'acquisition se verrouillent aléatoirement sur des états de phase différents et il s'ensuit une rotation de phase indéterminée entre les constellations des différents blocs de symboles produits par ces démodulateurs. Pour lever l'ambiguïté, on isole une phase de référence identifiable par le démodulateur, comme par exemple celle du premier (ou dernier ou nième) symbole d'une séquence remarquable connue (le mot de synchronisation).

En absence de ce mot de synchronisation, on veut à minima que les différents démodulateurs 10 puissent identifier leur état de phase relatif, ce qui permettra au module de reconstruction 12 de corriger cette différence préalablement à la levée d'ambiguïté. C'est pourquoi, lorsque le signal acquis par l'antenne radio s'avère être modulé par une constellation présentant une ambiguïté de phase, le démodulateur numérique 10 d'indice i estime la phase de la porteuse associée à l'oscillateur local de son algorithme de synchronisation et la transmet avantageusement au module de reconstruction 12 avec les métadonnées. Dans le cas où le démodulateur numérique 10 d'indice i met en œuvre une PLL, cette phase est la phase d'un oscillateur contrôlé numériquement (NCO) de cette PLL. Pour que le module de reconstruction puisse corriger la rotation de phase entre deux blocs consécutifs, il suffit alors que la phase ait été mesurée à deux instant identiques, à la fois dans le bloc i-1 et le bloc i. Pour cela faut donc, dans chaque bloc, par exemple, transmettre la valeur de la phase de la porteuse synchronisée aux instants correspondants au dernier échantillon de la garde et au dernier échantillon du bloc.

Le dernier échantillon du bloc i-1 est le même que le dernier échantillon de l'entête du bloc i. A régime établi, les PLL de synchronisation de la fréquence porteuse des démodulateurs 10 pour le bloc i-1 et le bloc i sont verrouillées avec la même fréquence instantanée et une phase qui ne peut différer que de $2k\Pi/m$ où m est l'ordre de l'ambiguïté. Si la phase de l'OL du démodulateur i est $\phi_i$ et celle du démodulateur du bloc i-1 $\phi_{i-1}$, alors on a forcément $\phi_i-\phi_{i-1} \approx 2k\Pi/m$ et les symboles démodulés par le démodulateur du bloc i ont subi une rotation de $-2k\Pi/m$ par rapport à ceux du bloc i-1. On doit donc déterminer la valeur de k avec k/m le plus proche de $(\phi_i-\phi_{i-1})/2\Pi$ et effectuer une rotation de $2k\Pi/m$ aux symboles issus du bloc i pour les aligner sur ceux du bloc i-1. Ainsi, l'algorithme de reconstruction n'effectue pas de correction pour le bloc 0, puis de proche en proche, effectue une rotation sur les symboles issus du bloc i qui cumule la phase de la rotation préalablement effectuée sur les symboles issus du bloc i-1 avec $2k\Pi/m$, la valeur plus proche de $\phi_i-\phi_{i-1}$ qui est la différence de phase telle que définie ci-dessus entre le dernier échantillon de l'entête du bloc i et le dernier échantillon du bloc i-1.

De préférence, le démodulateur numérique 10 d'indice i génère une trame contenant non seulement le bloc de symboles qu'il a produit sur la base du bloc d'échantillon d'indice i, mais contenant également un ensemble de métadonnées. Cet ensemble de métadonnées peut comprendre :

- la position fractionnaire relative aux échantillons et le rapport signal sur bruit associés au symbole final produit par ce démodulateur. De préférence, ces métadonnées sont incluses dans un suffixe qui suit le bloc de symboles d'indice i dans la trame.
- la position fractionnaire relative aux échantillons et le rapport signal sur bruit associés au symbole initial produit par ce démodulateur. De préférence, ces métadonnées sont incluses dans un préfixe qui précède le bloc de symboles d'indice i dans la trame.
- la phase de la porteuse synchronisée par le démodulateur à l'instant du dernier échantillon de la garde.
- La phase de la porteuse synchronisée par le démodulateur à l'instant du dernier échantillon du bloc.

La trame est ensuite envoyée au module de reconstruction 12. Ainsi, c'est sur la base du contenu des K trames qu'il reçoit (métadonnées et symboles) que le module de reconstruction 12 reconstruit le signal de sortie.

Bien entendu, tous les traitements mis en œuvre par le module de reconstruction 12 sont répétés K-1 fois, pour chaque paire de bloc de symboles d'indices consécutifs i-1 et i. Ainsi, K-1 détections d'éventuelle redondance sont mises en œuvre, de même que K-1 concaténations, et au plus K-1 ajustements de phase.

Toutes les étapes qui précèdent peuvent être répétées dans le temps pour plusieurs séquences d'échantillons produites par le convertisseur analogique-numérique 4. En particulier, il à noter le bloc de symboles d'indice K élaboré à partir d'une séquence d'échantillons donnée et le bloc de symboles d'indice 1 élaboré à partie d'une séquence d'échantillons suivante sont assemblés selon la même logique que celle décrite précédemment au sein d'une seule et même séquence.

L'invention ne se limite pas aux seuls modes de réalisation détaillés ci-dessus.

Ainsi, les K blocs d'échantillons formés par le distributeur 8 peuvent être de tailles identiques ou différentes, avoir des échantillons de synchronisation en nombre identique ou différent, et avoir des échantillons de garde en nombre identique ou différent.

Dans une variante de réalisation, les métadonnées fournies par le démodulateur au module de reconstruction peuvent être calculées à des instants légèrement décalés ou même variables dans le temps, du moment qu'elles ont été calculées en fin d'entête pour les métadonnées de début et en toute fin de bloc pour celles de fin, la zone de variation pouvant être de quelques périodes symbole. Dans ce cas, il importe que la datation exacte (précise à une fraction d'échantillon) accompagne chaque métadonnée. Le module de reconstruction qui veut les exploiter doit alors passer par une étape d'extrapolation des métadonnées pour les faire coïncider à des instants identiques pour deux blocs consécutifs. Par exemple, la fréquence porteuse de l'OL synchronisation est conservée par extrapolation car elle varie lentement, la phase de cette porteuse est extrapolée par une formule linéaire utilisant la fréquence porteuse comme pente de variation dans le temps, la position d'un centre de symbole peut être décalée aux symboles adjacents par l'ajout ou le retranchement d'une période symbole (connue par le module de reconstruction).

Il est aussi possible d'utiliser une autre base de temps pour la datation des échantillons et des métadonnées que le rythme d'échantillonnage, c'est-à-dire numéro d'ordre et la partie fractionnaire relative dans la séquence d'échantillons. Les métadonnées issues des démodulateurs sont alors accompagnées de leur date dans cette base de temps.

Cette méthode permet d'envisager l'utilisation de blocs d'échantillons issus de matériels différents ayant été synchronisés à distance par la même base de temps. En particulier, dans un autre mode de fonctionnement, la séquence d'échantillons de signal numérique passée en entrée du distributeur 8 peut avoir été produite par plusieurs convertisseurs analogique-numériques indépendantes, sur la base de mêmes signaux analogiques modulés préalablement acquis par différentes antennes radio.

**3/ Résultats de tests**

Le procédé qui précède a été testé avec un dispositif de traitement équipée de deux processeurs Intel Xeon 5130 fonctionnant à une fréquence de 2.00 GHz. Avec un seul démodulateur numérique, un débit de 10 Mbits/s a été atteint. Cependant, en ajoutant un deuxième démodulateur numérique en parallèle du premier, le débit est augmenté et a atteint 16 Mbits/s (avec un recouvrement de 1/10 du total des échantillons).

Ce même test a été effectué sur une machine équipée d'un processeur Intel Xeon E3-1220-v3 fonctionnant à une fréquence de 3.10 GHz.

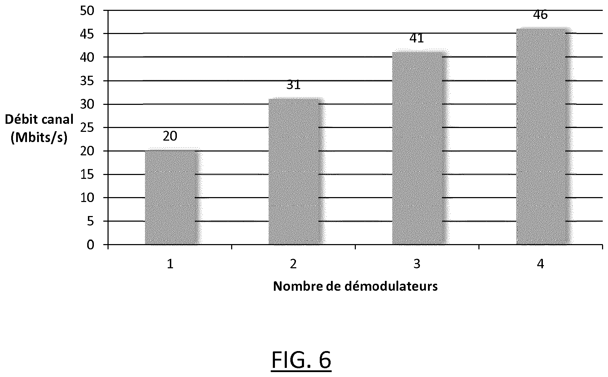

En référence à la **figure 6,** il y a un ratio de 1.6 entre les performances obtenues avec un démodulateur unique et celles obtenues avec deux démodulateurs en parallèle. En augmentant encore le nombre de démodulateurs, ce ratio devient encore plus important.

**Revendications**

1. Procédé de traitement d'une séquence d'échantillons de signal numérique issue d'au moins un signal analogique modulé, la séquence d'échantillons comprenant une première sous-séquence d'échantillons (E1-E9) et une deuxième sous-séquence d'échantillons (E10-E14) disjointe de la première sous-séquence d'échantillons, le procédé comprenant des étapes de :

   • formation (106) d'un premier bloc d'échantillons comprenant la première sous-séquence d'échantillons (E1-E9), et d'un deuxième bloc d'échantillons comprenant des échantillons d'entête (E6-E9) suivis de la deuxième sous-séquence d'échantillons (E10-E14),
   • démodulation (108) du premier bloc d'échantillons de signal numérique par un premier démodulateur numérique, de sorte à produire un premier bloc de symboles (S2-S4),
   • démodulation (108) du deuxième bloc d'échantillons de signal numérique par un deuxième démodulateur numérique indépendant du premier démodulateur numérique de sorte à produire un deuxième bloc de symboles (S4-S6), le deuxième démodulateur numérique mettant en œuvre une synchronisation de porteuse et/ou de rythme symbole, et prenant en entrée le deuxième bloc d'échantillons en commençant par les échantillons d'entête (E6-E9), les échantillons d'entête comprenant des échantillons de synchronisation (E6) en nombre adapté pour que la synchronisation soit effective avant que le deuxième démodulateur numérique ne commence à démoduler la deuxième sous-séquence d'échantillons (E10-E14),
   • reconstruction (114) d'une séquence de symboles de sortie par concaténation d'une séquence de symboles issue du premier bloc de symboles avec une séquence de symboles issue du deuxième bloc de symboles,

dans lequel la première sous-séquence d'échantillons comprend des échantillons de queue du premier bloc d'échantillons, et dans lequel les échantillons d'entête du deuxième bloc d'échantillons correspondent aux échantillons de queue.

2. Procédé selon la revendication précédente, dans lequel les échantillons d'entête comprennent en outre des échantillons de garde (E7-E9) situés, dans le deuxième bloc d'échantillons, entre les échantillons de synchronisation (E6) et la deuxième sous-séquence d'échantillons (E10-E14), les échantillons de garde étant en nombre supérieur à un nombre maximal d'échantillons par symbole dans la séquence d'échantillons de signal numérique.

3. Procédé selon l'une des revendications précédentes, dans lequel le deuxième démodulateur numérique ayant reçu le deuxième bloc d'échantillons ne produit pas de symboles tant que les échantillons d'entête ne sont pas consommés par le deuxième démodulateur.

4. Procédé selon l'une des revendications précédentes, comprend une génération, par le premier démodulateur numérique, d'un premier ensemble de métadonnées relatif au premier bloc de symboles, et une génération, par le deuxième démodulateur numérique, d'un deuxième ensemble de métadonnées relatif au deuxième bloc de symboles, dans lequel la reconstruction est mise en œuvre à l'aide du premier ensemble de métadonnées et du deuxième ensemble de métadonnées.

5. Procédé selon la revendication précédente, comprenant des étapes de

   • détection (110) d'une redondance entre au moins un symbole du premier bloc de symboles et au moins un symbole du deuxième bloc de symboles, à l'aide du premier ensemble de métadonnées et du deuxième ensemble de métadonnées,
   • pour au moins une paire de symboles détectés comme étant redondants, retenue dans la séquence de sortie de seulement un parmi les deux symboles de la paire.

6. Procédé selon la revendication 5, dans lequel :

   • le procédé comprend une estimation d'un rapport signal sur bruit associé au premier bloc de symboles, et d'un rapport signal sur bruit associé au deuxième bloc de symboles, le symbole retenu dans le signal de sortie parmi deux symboles redondants étant celui qui est issu du bloc de symbole associé au rapport signal sur bruit le plus élevé parmi les deux rapports sur bruit estimés, ou
   • la séquence de symboles issue du deuxième bloc de symboles suit la séquence de symboles issue du premier bloc de symboles dans la séquence de symboles de sortie, et le symbole retenu dans la séquence de sortie parmi deux symboles détectés comme étant redondants est le symbole redondant du premier bloc de symboles.

7. Procédé selon l'une des revendications 4 à 6, dans lequel

   • le premier ensemble de métadonnées comprend une première position $\left(N_f^1;\ \mu_f^1\right)$ déterminée par le premier démodulateur et permettant de situer le symbole final dans le premier bloc d'échantillons, et,

   • le deuxième ensemble de métadonnées comprend une deuxième position $\left(N_d^2;\ \mu_d^2\right)$ déterminée par le premier démodulateur et permettant de situer le symbole initial dans le deuxième bloc d'échantillons,
   • le nombre de blocs redondants entre le premier bloc de symboles et le deuxième bloc de symbole est calculé en fonction d'un écart entre la première position et la deuxième position.

8. Procédé selon l'une des revendications 4 à 7, comprenant par ailleurs une génération, par le premier démodulateur numérique, d'une première trame comprenant le premier bloc de symboles et le premier ensemble de métadonnées, et une génération, par le deuxième démodulateur numérique, d'une deuxième trame comprenant le deuxième bloc de symboles et le deuxième ensemble de métadonnées.

9. Procédé selon la revendication précédente, dans lequel le premier ensemble de métadonnées forme un suffixe qui suit le premier bloc de symboles dans la première trame, et dans lequel le deuxième ensemble de métadonnées forme un préfixe suivi du deuxième bloc de symboles dans la deuxième trame.

**10.** Procédé selon l'une des revendications 4 à 9, comprenant par ailleurs des étapes de :

- estimation par le premier démodulateur numérique d'une première phase de porteuse synchronisée associée au premier bloc de symboles,
- estimation par le deuxième démodulateur numérique d'une deuxième phase de porteuse synchronisée associée au deuxième bloc de symboles,
- si les deux phases de synchronisation de porteuse synchronisée diffèrent, ajustement d'un des blocs de symboles relativement à l'autre bloc de symboles de sorte à éliminer cette différence de phase, avant la reconstruction du signal de sortie.

**11.** Procédé selon la revendication 10 en combinaison avec la revendication 4, dans lequel la première phase est incluse dans le premier ensemble de métadonnées et la deuxième phase est incluse dans le deuxième ensemble de métadonnées.

**12.** Procédé selon l'une des revendications précédentes, comprenant la génération de métadonnées relatives au deuxième bloc d'échantillons formé, lesdites métadonnées étant transmises au deuxième démodulateur numérique et comprenant le nombre total d'échantillons du deuxième bloc d'échantillons et/ou le nombre d'échantillons de synchronisation du bloc et/ou une fréquence centrale de la séquence d'échantillons de signal numérique.

**13.** Procédé selon l'une des revendications précédentes, comprenant en outre des étapes de :

- détermination d'un écart fréquentiel entre une fréquence centrale de la séquence d'échantillons de signal numérique et une fréquence centrale attendue,
- correction de la séquence d'échantillons de signal numérique d'après l'écart de fréquentiel pour supprimer cet écart dans la séquence d'échantillons, avant la mise en œuvre de l'étape de formation des blocs d'échantillons, ou bien correction d'un des blocs d'échantillons par l'un des démodulateurs numériques.

**14.** Produit programme d'ordinateur comprenant des instructions de code de programme pour l'exécution des étapes du procédé selon l'une des revendications précédentes, lorsque ce programme est exécuté par au moins un processeur.

**15.** Dispositif de traitement (6) d'une séquence d'échantillons de signal numérique issue d'au moins un signal analogique modulé, la séquence d'échantillons comprenant une première sous-séquence d'échantillons et une deuxième sous-séquence d'échantillons disjointe de la première sous-séquence d'échantillons, le dispositif de traitement (6) comprenant :

- un distributeur (8) configuré pour former un premier bloc d'échantillons comprenant la première sous-séquence d'échantillons, et pour former un deuxième bloc d'échantillons comprenant des échantillons d'entête suivis de la deuxième sous-séquence d'échantillons,
- un premier démodulateur numérique (10) configuré pour démoduler le premier bloc d'échantillons de signal numérique de sorte à produire un premier bloc de symboles,
- un deuxième démodulateur numérique (10) indépendant du premier démodulateur numérique et configuré pour démoduler le deuxième bloc d'échantillons de signal numérique par de sorte à produire un deuxième bloc de symboles, le deuxième démodulateur numérique étant configuré pour mettre en œuvre une synchronisation de porteuse et/ou de rythme symbole, et prendre en entrée le deuxième bloc d'échantillons en commençant par les échantillons d'entête, les échantillons d'entête comprenant des échantillons de synchronisation en nombre adapté pour que la synchronisation soit effective avant que le deuxième démodulateur numérique ne commence à démoduler la deuxième sous-séquence d'échantillons,
- un module de reconstruction (12) configuré pour reconstruire une séquence de symboles de sortie par concaténation d'une séquence de symboles issue du premier bloc de symboles avec une séquence de symboles issue du deuxième bloc,

dans lequel la première sous-séquence d'échantillons comprend des échantillons de queue du premier bloc d'échantillons, et dans lequel les échantillons d'entête du deuxième bloc d'échantillons correspondent aux échantillons de queue.

**EP 3 811 580 B1**

**Patentansprüche**

1. Verfahren zur Verarbeitung einer Folge von digitalen Signalabtastungen, die von mindestens einem modulierten analogen Signal stammt, wobei die Folge von Abtastungen eine erste Unterfolge von Abtastungen (E1 bis E9) und eine zweite Unterfolge von Abtastungen (E10 bis E14) umfasst, die von der ersten Unterfolge von Abtastungen getrennt ist, wobei das Verfahren die folgenden Schritte umfasst:

   • Bilden (106) eines ersten Blocks von Abtastungen, der die erste Unterfolge von Abtastungen (E1 bis E9) umfasst, und eines zweiten Blocks von Abtastungen, der Kopfabtastungen (E6 bis E9), gefolgt von der zweiten Unterfolge von Abtastungen (E10 bis E14) umfasst,
   • Demodulieren (108) des ersten Blocks von digitalen Signalabtastungen durch einen ersten digitalen Demodulator, derart dass ein erster Block von Symbolen (S2 bis S4) erzeugt wird;
   • Demodulieren (108) des zweiten Blocks von digitalen Signalabtastungen durch einen zweiten digitalen Demodulator, der unabhängig vom ersten digitalen Demodulator ist, derart dass ein zweiter Block von Symbolen (S4 bis S6) gebildet wird, wobei der zweite digitale Demodulator eine Träger- und/oder Symbolrhythmussynchronisation durchführt und als Eingang den zweiten Block von Abtastungen, beginnend mit den Kopfabtastungen (E6 bis E9), nimmt, wobei die Kopfabtastungen Synchronisationsabtastungen (E6) in einer Anzahl umfassen, die angepasst ist, damit die Synchronisation wirksam ist, bevor der zweite digitale Demodulator mit dem Demodulieren der zweiten Unterfolge von Abtastungen (E10 bis E14) beginnt,
   • Rekonstruieren (114) einer Ausgangssymbolfolge durch Verkettung einer Folge von Symbolen, die von dem ersten Block von Symbolen stammt, mit einer Folge von Symbolen, die von dem zweiten Block von Symbolen stammt,

   wobei die zweite Unterfolge von Abtastungen Endabtastungen des ersten Blocks von Abtastungen umfasst und wobei die Kopfabtastungen des zweiten Blocks von Abtastungen den Endabtastungen entsprechen.

2. Verfahren nach dem vorhergehenden Anspruch, wobei die Kopfabtastungen ferner Schutzabtastungen (E7 bis E9) umfassen, die sich im zweiten Block von Abtastungen zwischen den Synchronisationsabtastungen (E6) und der zweiten Unterfolge von Abtastungen (E10 bis E14) befinden, wobei die Anzahl der Schutzabtastungen größer als eine maximale Anzahl von Abtastungen pro Symbol in der Folge von digitalen Signalabtastungen ist.

3. Verfahren nach einem der vorhergehenden Ansprüche, wobei der zweite digitale Demodulator, der den zweiten Block von Abtastungen empfangen hat, keine Symbole erzeugt, solange die Kopfabtastungen nicht von dem zweiten Demodulator verbraucht wurden.

4. Verfahren nach einem der vorhergehenden Ansprüche, das eine Erzeugung einer ersten Menge von Metadaten, die den ersten Block von Symbolen betreffen, durch den ersten digitalen Demodulator und eine Erzeugung einer zweiten Menge von Metadaten, die den zweiten Block von Symbolen betreffen, durch den zweiten digitalen Demodulator umfasst, wobei die Rekonstruktion mittels der ersten Menge von Metadaten und der zweiten Menge von Metadaten durchgeführt wird.

5. Verfahren nach dem vorhergehenden Anspruch, das die folgenden Schritte umfasst:

   • Erkennen (110) einer Redundanz zwischen mindestens einem Symbol des ersten Blocks von Symbolen und mindestens einem Symbol des zweiten Blocks von Symbolen mittels der ersten Menge von Metadaten und der zweiten Menge von Metadaten,
   • für mindestens ein Paar von als redundant erkannten Symbolen, Berücksichtigen von lediglich einem der beiden Symbole des Paares in der Ausgangsfolge.

6. Verfahren nach Anspruch 5, wobei:

   • das Verfahren eine Schätzung eines Signal-Rausch-Verhältnisses, das mit dem ersten Block von Symbolen verbunden ist, und eines Signal-Rausch-Verhältnisses umfasst, das mit dem zweiten Block von Symbolen verbunden ist, wobei das von den beiden redundanten Symbolen in dem Ausgangssignal berücksichtigte Symbol dasjenige ist, das von dem Symbolblock stammt, der mit dem höheren Signal-Rausch-Verhältnis von den beiden geschätzten Signal-Rausch-Verhältnissen verbunden ist, oder
   • die Folge von Symbolen, die von dem zweiten Block von Symbolen stammt, auf die Folge von Symbolen folgt, die von dem ersten Block von Symbolen in der Folge von Ausgangssymbolen stammt, und das von den beiden als redundant erkannten Symbolen in der Ausgangsfolge berücksichtigte Symbol das redundante Symbol des ersten Blocks von Symbolen ist.

7. Verfahren nach einem der Ansprüche 4 bis 6, wobei

   • die erste Menge von Metadaten eine erste Position $(N_f^1; \mu_f^1)$ umfasst, die durch den ersten Demodulator bestimmt wird und das Auffinden des Endsymbols in dem ersten Block von Abtastungen ermöglicht, und

   • die zweite Menge von Metadaten eine zweite Position $(N_d^2; \mu_d^2)$ umfasst, die durch den zweiten Demodulator bestimmt wird und das Auffinden des Anfangssymbols in dem zweiten Block von Abtastungen ermöglicht,
   • die Anzahl der redundanten Blöcke zwischen dem ersten Block von Symbolen und dem zweiten Block von Symbolen in Abhängigkeit von einem Abstand zwischen der ersten Position und der zweiten Position berechnet wird.

8. Verfahren nach einem der Ansprüche 4 bis 7, das ferner eine Erzeugung eines ersten Rahmens, der den ersten Block von Symbolen und die erste Menge von Metadaten umfasst, durch den ersten digitalen Demodulator und eine Erzeugung eines zweiten Rahmens, der den zweiten Block von Symbolen und die zweite Menge von Metadaten umfasst, durch den zweiten digitalen Demodulator umfasst.

9. Verfahren nach dem vorhergehenden Anspruch, wobei die erste Menge von Metadaten ein Suffix bildet, das auf den ersten Block von Symbolen in dem ersten Rahmen folgt, und wobei die zweite Menge von Metadaten ein Präfix bildet, auf das der zweite Block von Symbolen in dem zweiten Rahmen folgt.

10. Verfahren nach einem der Ansprüche 4 bis 9, das ferner die folgenden Schritte umfasst:

    • Schätzen einer ersten synchronisierten Trägerphase, die mit dem ersten Block von Symbolen verbunden ist, durch den ersten digitalen Demodulator,
    • Schätzen einer zweiten synchronisierten Trägerphase, die mit dem zweiten Block von Symbolen verbunden ist, durch den zweiten digitalen Demodulator,
    • wenn die beiden synchronisierten Trägerphasen sich voneinander unterscheiden, Anpassen von einem der Blöcke von Symbolen in Bezug auf den anderen Block von Symbolen, derart dass diese Phasendifferenz vor der Rekonstruktion des Ausgangssignals beseitigt wird.

11. Verfahren nach Anspruch 10 in Kombination mit Anspruch 4, wobei die erste Phase in die erste Menge von Metadaten aufgenommen wird und die zweite Phase in die zweite Menge von Metadaten aufgenommen wird.

12. Verfahren nach einem der vorhergehenden Ansprüche, das die Erzeugung von Metadaten umfasst, die den zweiten gebildeten Block von Abtastungen betreffen, wobei die Metadaten an den zweiten digitalen Demodulator übertragen werden und die Gesamtanzahl von Abtastungen des zweiten Blocks von Abtastungen und/oder die Anzahl von Synchronisationsabtastungen des Blocks und/oder eine Mittenfrequenz der Folge von digitalen Signalabtastungen umfassen.

13. Verfahren nach einem der vorhergehenden Ansprüche, das ferner die folgenden Schritte umfasst:

    • Bestimmen eines Frequenzabstands zwischen einer Mittenfrequenz der Folge von digitalen Signalabtastungen und einer erwarteten Mittenfrequenz,
    • Korrigieren der Folge von digitalen Signalabtastungen gemäß dem Frequenzabstand, um diesen Abstand in der Folge von Abtastungen vor dem Durchführen des Schritts der Bildung von Blöcken von Abtastungen zu beseitigen, oder Korrigieren von einem der Blöcke von Abtastungen durch einen der digitalen Demodulatoren.

14. Computerprogrammprodukt, das Programmcodeanweisungen für die Ausführung der Schritte des Verfahrens nach einem der vorhergehenden Ansprüche umfasst, wenn dieses Programm durch mindestens einen Prozessor ausgeführt wird.

15. Vorrichtung (6) zur Verarbeitung einer Folge von digitalen Signalabtastungen, die von mindestens einem modulierten analogen Signal stammen, wobei die Folge von Abtastungen eine erste Unterfolge von Abtastungen und eine zweite Unterfolge von Abtastungen umfasst, die von der ersten Unterfolge von Abtastungen getrennt ist, wobei die Verarbeitungsvorrichtung (6) umfasst:

• einen Verteiler (8), der dazu ausgestaltet ist, einen ersten Block von Abtastungen zu bilden, der die erste Unterfolge von Abtastungen umfasst, und einen zweiten Block von Abtastungen zu bilden, der Kopfabtastungen, gefolgt von der zweiten Unterfolge von Abtastungen umfasst,

• einen ersten digitalen Demodulator (10), der dazu ausgestaltet ist, den ersten Block von digitalen Signalabtastungen zu demodulieren, derart dass ein erster Block von Symbolen erzeugt wird,

• einen zweiten digitalen Demodulator (10), der unabhängig von dem ersten digitalen Demodulator ist und dazu ausgestaltet ist, den zweiten Block von digitalen Signalabtastungen zu demodulieren, derart dass ein zweiter Block von Symbolen erzeugt wird, wobei der zweite digitale Demodulator dazu ausgestaltet ist, eine Träger- und/oder Symbolrhythmussynchronisation durchzuführen und als Eingang den zweiten Block von Abtastungen, beginnend mit den Kopfabtastungen zu nehmen, wobei die Kopfabtastungen Synchronisationsabtastungen in einer Anzahl umfassen, die angepasst ist, damit die Synchronisation wirksam ist, bevor der zweite digitale Demodulator mit dem Demodulieren der zweiten Unterfolge von Abtastungen beginnt,

• ein Rekonstruktionsmodul (12), das dazu ausgestaltet ist, eine Ausgangssymbolfolge durch Verkettung einer Folge von Symbolen, die von dem ersten Block von Symbolen stammt, mit einer Folge von Symbolen zu rekonstruieren, die von dem zweiten Block stammt,

wobei die erste Unterfolge von Abtastungen Endabtastungen des ersten Blocks von Abtastungen umfasst und wobei die Kopfabtastungen des zweiten Blocks von Abtastungen den Endabtastungen entsprechen.

**Claims**

1. A method for processing a sequence of digital signal samples coming from at least one modulated analog signal, the sample sequence comprising a first sample sub-sequence (E1-E9) and a second sample sub-sequence (E10-E14) separate from the first sample sub-sequence, the method comprising steps of:

• forming (106) a first sample block comprising the first sample sub-sequence (E1-E9), and a second sample block comprising header samples (E6-E9) followed by the second sample sub-sequence (E10-E14),

• demodulating (108) the first block of digital signal samples by a first digital demodulator, so as to produce a first symbol block (S2-S4),

• demodulating (108) the second block of digital signal samples by a second digital demodulator independent of the first digital demodulator so as to produce a second symbol block (S4-S6), the second digital demodulator implementing a carrier and/or symbol rate synchronization, and taking as input the second sample block starting with the header samples (E6-E9), the header samples comprising a suitable number of synchronization samples (E6) for the synchronization to be effective before the second digital demodulator starts to demodulate the second sample sub-sequence (E10-E14),

• reconstructing (114) an output symbol sequence by concatenating a symbol sequence coming from the first symbol block with a symbol sequence coming from the second symbol block,

wherein the first sample sub-sequence comprises tail samples of the first sample block, and the header samples of the second sample block correspond to the tail samples.

2. The method as claimed in the preceding claim, wherein the header samples further comprise guard samples (E7-E9) located, in the second sample block, between the synchronization samples (E6) and the second sample sub-sequence (E10-E14), the guard samples being of a number greater than a maximum number of samples per symbol in the sequence of digital signal samples.

3. The method as claimed in one of the preceding claims, wherein the second digital demodulator having received the second sample block does not produce symbols as long as the header samples have not been consumed by the second demodulator.

4. The method as claimed in one of the preceding claims, comprising generating, by the first digital demodulator, a first set of metadata relating to the first symbol block, and generating, by the second digital demodulator, a second set of metadata relating to the second symbol block, wherein the reconstructing is implemented using the first set of metadata and the second set of metadata.

5. The method as claimed in the preceding claim, comprising steps of

• detecting (110) a redundancy between at least one symbol of the first symbol block and at least one symbol of the second symbol block, using the first set of metadata and the second set of metadata,
• for at least one pair of symbols detected as being redundant, retaining in the output sequence of only one out of the two symbols of the pair.

6. The method as claimed in claim 5, wherein:

• the method comprises estimating a signal-to-noise ratio associated with the first symbol block, and a signal-to-noise ratio associated with the second symbol block, the symbol retained in the output signal out of two redundant symbols being the one that comes from a symbol block associated with a highest signal-to-noise ratio among the estimated signal-to-noise ratios, or
• the symbol sequence coming from the second symbol block follows the symbol sequence coming from the first symbol block in the output symbol sequence, and the symbol retained in the output sequence out of two symbols detected as being redundant is the redundant symbol of the first symbol block.

7. The method as claimed in one of claims 4 to 6, wherein

• the first set of metadata comprises a first position $(N_f^1; \mu_f^1)$ determined by the first demodulator and locating the final symbol in the first sample block, and

• the second set of metadata comprises a second position $(N_d^2; \mu_d^2)$ determined by the first demodulator and locating the initial symbol in the second sample block,
• the number of redundant blocks between the first symbol block and the second symbol block is computed as a function of a separation between the first position and the second position.

8. The method as claimed in one of claims 4 to 7, further comprising generating, by the first digital demodulator, a first frame comprising the first symbol block and the first set of metadata, and generating, by the second digital demodulator, a second frame comprising the second symbol block and the second set of metadata.

9. The method as claimed in the preceding claim, wherein the first set of metadata forms a suffix that follows the first symbol block in the first frame, and wherein the second set of metadata forms a prefix followed by the second symbol block in the second frame.

10. The method as claimed in one of claims 4 to 9, moreover comprising steps of:

• estimating, by the first digital demodulator, a first synchronized carrier phase associated with the first symbol block,
• estimating, by the second digital demodulator, a second synchronized carrier phase associated with the second symbol block,
• if the two phases of synchronized carrier synchronization differ, adjusting one of the symbol blocks in relation to the other, so as to eliminate the phase difference before reconstructing the output signal.

11. The method as claimed in claim 10 in combination with claim 4, wherein the first phase is included in the first set of metadata and the second phase is included in the second set of metadata.

12. The method as claimed in one of the preceding claims, comprising generating metadata relating to the second sample block formed, said metadata being transmitted to the second digital demodulator and comprising the total number of samples of the second sample block and/or the number of synchronization samples of the block and/or a center frequency of the sequence of digital signal samples.

13. The method as claimed in one of the preceding claims, further comprising steps of:

• determining a frequency separation between a center frequency of the sequence of digital signal samples and an expected center frequency,
• correcting the sequence of digital signal samples according to the frequency separation to remove this separation in the sample sequence before implementing the step of forming sample blocks, or else correcting one of the sample blocks by one of the digital demodulators.

**14.** A computer program product comprising program code instructions for executing the steps of the method according to one of the preceding claims, when this program is executed by at least one processor.

**15.** A device (6) for processing a sequence of digital signal samples coming from at least one modulated analog signal, the sample sequence comprising a first sample sub-sequence and a second sample sub-sequence separate from the first sample sub-sequence, the processing device (6) comprising:

• a distributor (8) configured to form a first sample block comprising the first sample sub-sequence, and to form a second sample block comprising header samples followed by the second sample sub-sequence,
• a first digital demodulator (10) configured to demodulate the first block of digital signal samples so as to produce a first symbol block,
• a second digital demodulator (10) independent of the first digital demodulator and configured to demodulate the second block of digital signal samples so as to produce a second symbol block, the second digital demodulator being configured to implement a carrier and/or symbol rate synchronization, and to take as input the second sample block starting with the header samples, the header samples comprising synchronization samples in a suitable number for the synchronization to be effective before the second digital demodulator starts to demodulate the second sample sub-sequence,
• a reconstructing module (12) configured to reconstruct an output symbol sequence by concatenating a symbol sequence coming from the first symbol block with a symbol sequence coming from the second block.

wherein the first sample sub-sequence comprises tail samples of the first sample block, and wherein the header samples of the second sample block correspond to the tail samples.

FIG. 1

```
┌─────────────────────────────────────────────────────────┐  ⌐ 100
│         Réception d'un signal analogique modulé          │
└─────────────────────────────────────────────────────────┘
                            │
                            ▼
┌─────────────────────────────────────────────────────────┐  ⌐ 102
│     Numérisation du signal analogique en une séquence    │
│                      d'échantillons                      │
└─────────────────────────────────────────────────────────┘
                            │
                            ▼
┌─────────────────────────────────────────────────────────┐  ⌐ 104
│   Correction de la séquence pour éliminer un écart entre une │
│   fréquence centrale de la séquence et une fréquence attendue │
└─────────────────────────────────────────────────────────┘
                            │
                            ▼
┌─────────────────────────────────────────────────────────┐  ⌐ 106
│             Formation de blocs d'échantillons            │
└─────────────────────────────────────────────────────────┘
                            │
                            ▼
┌─────────────────────────────────────────────────────────┐  ⌐ 108
│  Démodulations parallèles des blocs d'échantillons pour produire │
│                   des blocs de symboles                  │
└─────────────────────────────────────────────────────────┘
                            │
                            ▼
┌─────────────────────────────────────────────────────────┐  ⌐ 110
│        Détection de redondance entre blocs de symboles   │
└─────────────────────────────────────────────────────────┘
                            │
                            ▼
┌─────────────────────────────────────────────────────────┐  ⌐ 112
│   Correction de différences de phase entre blocs de symboles │
└─────────────────────────────────────────────────────────┘
                            │
                            ▼
┌─────────────────────────────────────────────────────────┐  ⌐ 114
│               Reconstruction signal sortie               │
└─────────────────────────────────────────────────────────┘
```

FIG. 2

| S1 | S2 | S3 | S4 | S5 | S6 |

E1 E2 E3 E4 E5 E6 E7 E8 E9 E10 E11 E12 E13 E14

<u>FIG. 3</u>

E1 E2 E3 E4 E5 E6 E7 E8 E9

E6 E7 E8 E9 E10 E11 E12 E13 E14

<u>FIG. 4</u>

| $\left(N_d^1; \mu_d^1\right)$ | S2 S3 S4 | $\left(N_f^1; \mu_f^1\right)$ |

<u>FIG. 5</u>

| $\left(N_d^2; \mu_d^2\right)$ | S4 S5 S6 | $\left(N_f^2; \mu_f^2\right)$ |

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1278345 A1


**Littérature non-brevet citée dans la description**

- **LUECKE J et al.** *Programmable digital communications receiver architecture for high data rate avionics and ground applications,* 15 Octobre 1990, 552-556